(19) **Europäisches Patentamt / European Patent Office / Office européen des brevets**

(11) **EP 4 708 853 A1**

(12) **EUROPEAN PATENT APPLICATION**
published in accordance with Art. 153(4) EPC

(43) Date of publication:
**11.03.2026 Bulletin 2026/11**

(21) Application number: **24797360.5**

(22) Date of filing: **22.04.2024**

(51) International Patent Classification (IPC):
**H04N 19/132** (2014.01)    **H04N 19/105** (2014.01)
**H04N 19/176** (2014.01)    **H04N 19/70** (2014.01)

(52) Cooperative Patent Classification (CPC):
**H04N 19/105; H04N 19/132; H04N 19/176; H04N 19/70**

(86) International application number:
**PCT/KR2024/005391**

(87) International publication number:
**WO 2024/225704 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.04.2023 KR 20230053482**

(71) Applicant: **LG Electronics Inc.**
**Yeongdeungpo-gu**
**Seoul 07336 (KR)**

(72) Inventors:
• **HONG, Myungoh**
  **Seoul 06772 (KR)**
• **LIM, Jaehyun**
  **Seoul 06772 (KR)**

(74) Representative: **Plasseraud IP**
**104 Rue de Richelieu**
**CS92104**
**75080 Paris Cedex 02 (FR)**

(54) **INTRA TEMPLATE MATCHING-BASED IMAGE ENCODING/DECODING METHOD, BITSTREAM TRANSMISSION METHOD, AND RECORDING MEDIUM FOR STORING BITSTREAM**

(57)    Provided are an image encoding/decoding method, a bitstream transmission method, and a computer-readable recording medium for storing a bitstream. The image decoding method, according to the present disclosure, may be an image decoding method carried out by an image decoding device, the image decoding method comprising the steps of: determining a search space associated with the current block; inducing errors between reference template regions which are the respective template regions of reference blocks in the search space, and the current template region which is the template region of the current block; and determining a reference block of the current block based on the errors.

[FIG. 14]

**EP 4 708 853 A1**

**Description**

[Technical Field]

The present disclosure relates to an image encoding/decoding method, a method of transmitting a bitstream, and a recording medium storing a bitstream, that is, to prediction based on intra template matching.

[Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

[Disclosure]

[Technical Problem]

The present disclosure is directed to providing an image encoding/decoding method and apparatus with improved encoding/decoding efficiency.

The present disclosure is also directed to proposing a template search region for effectively generating a template matching prediction (TMP) block.

The present disclosure is also directed to proposing a method of deriving a value of an unusable sample in a reference block or a reference template area.

The present disclosure is also directed to providing a non-transitory computer-readable recording medium for storing a bitstream generated using an image encoding method according to the present disclosure.

The present disclosure is also directed to providing a non-transitory computer-readable recording medium for storing a bitstream that is received and decoded by an image decoding apparatus according to the present disclosure and used for image reconstruction.

The present disclosure is also directed to providing a method of transmitting a bitstream generated using an image encoding method according to the present disclosure.

Technical objects to be achieved in the present disclosure are not limited to those described above, and other technical objects that have not been described above will be clearly understood by those skilled in the technical field to which the present disclosure pertains from the following description.

[Technical Solution]

An image decoding method performed by an image decoding apparatus according to an aspect of the present disclosure includes: determining a search region related to a current block; deriving errors between reference template areas which are template areas of reference blocks in the search region, and a current template area which is a template area of the current block; and determining a reference block of the current block based on the errors.

An image encoding method performed by an image encoding apparatus according to another aspect of the present disclosure includes: determining a search region related to a current block; deriving errors between reference template areas which are template areas of reference blocks in the search region, and a current template area which is a template area of the current block; and determining a reference block of the current block based on the errors.

A computer-readable recording medium according to another aspect of the present disclosure stores a bitstream generated using an image encoding method or apparatus according to the present disclosure.

According to a transmission method according to another aspect of the present disclosure, a bitstream generated using an image encoding method or apparatus according to the present disclosure is transmitted.

The features of the present disclosure briefly summarized above are only exemplary aspects of the following detailed description of the present disclosure and do not limit the scope of the present disclosure.

[Advantageous Effects]

According to the present disclosure, it is possible to provide an image encoding/decoding method and apparatus with improved encoding/decoding efficiency.

According to the present disclosure, it is also possible to improve the prediction performance of intra template matching.

According to the present disclosure, with an improvement in the prediction performance of intra template matching, it is also possible to improve coding efficiency.

According to the present disclosure, it is also possible to provide a non-transitory computer-readable recording medium for storing a bitstream generated using an image encoding method according to the present disclosure.

According to the present disclosure, it is also possible to provide a non-transitory computer-readable recording medium for storing a bitstream that is received and decoded by an image decoding apparatus according to the present disclosure and used for image reconstruction.

According to the present disclosure, it is also possible to provide a method of transmitting a bitstream generated using an image encoding method.

Effects of the present disclosure are not limited to those described above, and other effects that have not been described above will be clearly understood by those skilled in the technical field to which the present disclosure pertains from the following description.

[Description of Drawings]

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an

FIG. 4 is a flowchart illustrating an image encoding method based on intra prediction.

FIG. 5 is a diagram schematically illustrating an intra prediction unit in an image encoding apparatus.

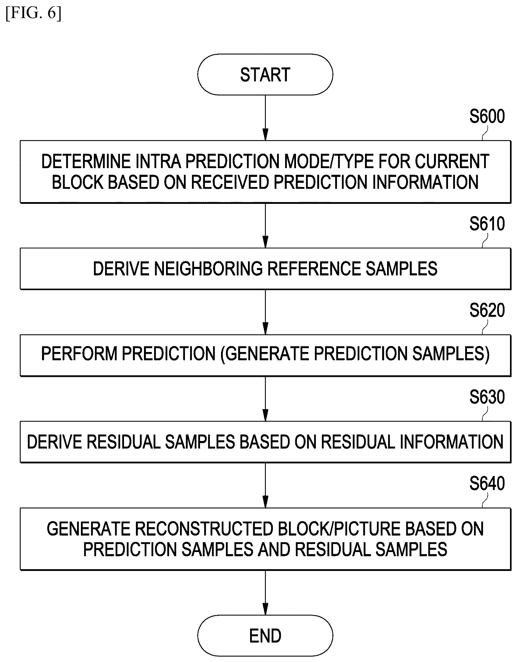

FIG. 6 is a flowchart illustrating an image encoding method based on intra prediction.

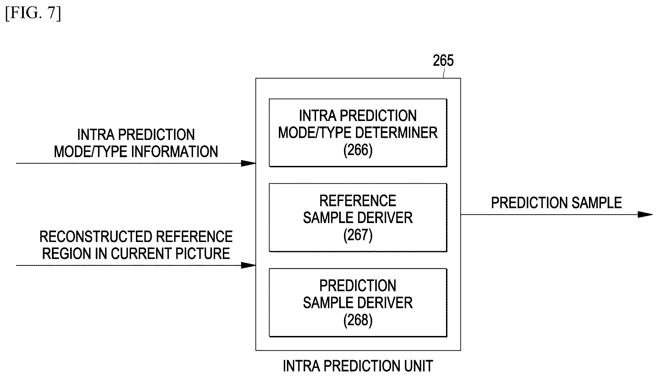

FIG. 7 is a diagram schematically illustrating an intra prediction unit in an image decoding apparatus.

FIGS. 8 to 11 are diagrams illustrating examples of a search region and a block vector (BV) candidate of intra template matching.

FIGS. 12 and 13 are diagrams illustrating examples of reference blocks deviating from search regions.

FIGS. 14 and 15 are flowcharts illustrating an image encoding method and an image decoding method according to an embodiment of the present disclosure.

FIG. 16 is a diagram illustrating an example of search positions for integer sample units and search positions for fractional sample units.

FIG. 17 is a diagram illustrating examples of BVs for a search region.

FIGS. 18 to 25 are diagrams illustrating examples of deriving unavailable sample values.

FIGS. 26 and 27 are flowcharts illustrating an image encoding method and image decoding method according to another embodiment of the present disclosure.

FIG. 28 is a view showing a content streaming system to which an embodiment of the present disclosure is applicable.

[Modes of the Invention]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image at a specific time, and a slice/tile is a coding unit constituting a portion of a picture, and a picture may be composed of one or more slices/tiles. In addition, a slice/tile may include one or more coding tree units (CTUs).

A "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with the terms such as "sample array", "block" or "area" in some cases. In a general case, an M×N block may include a set (or array) of samples (or a sample array) or transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

Overview of video coding system

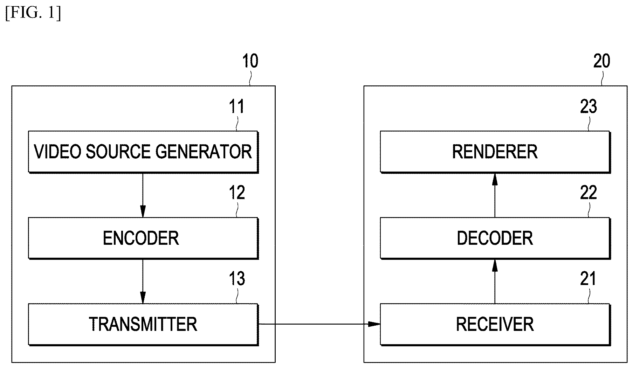

FIG. 1 is a view showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoding unit(encoder) 12 and a transmitter 13. The decoding device 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

Overview of image encoding apparatus

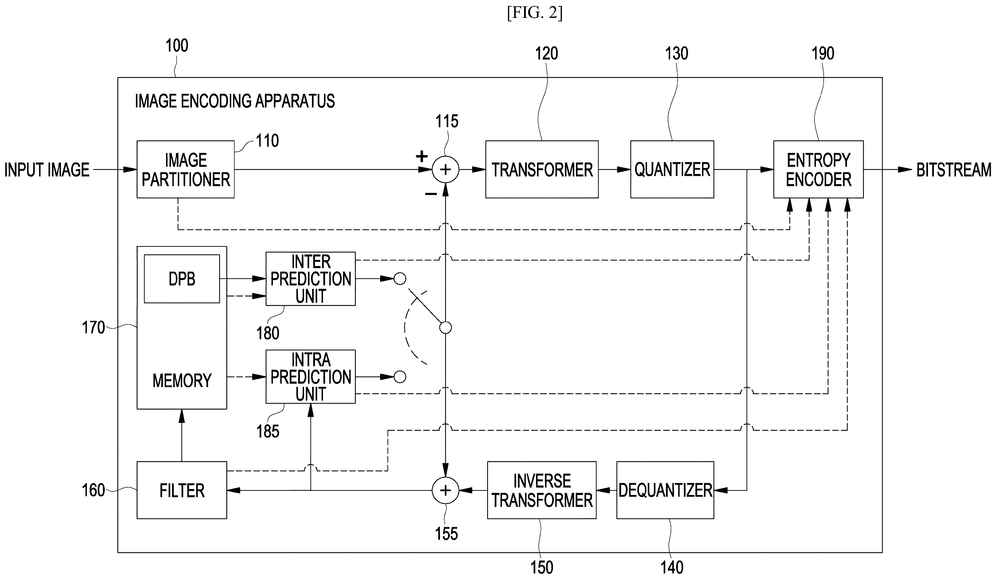

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

Overview of image decoding apparatus

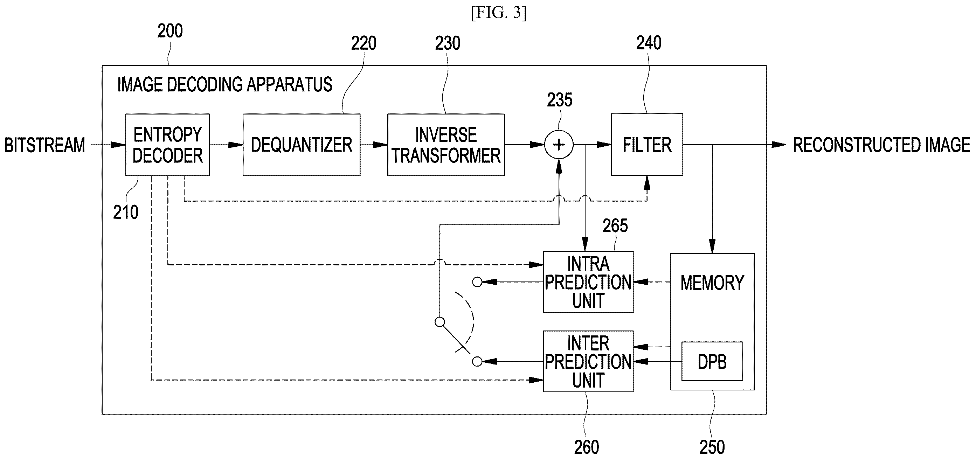

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

Intra prediction

Intra prediction may refer to prediction of generating prediction samples of a current block based on reference samples within a picture to which the current block belongs (hereinafter, "current picture"). When intra prediction is applied to the current block, neighboring reference samples to be used for intra prediction of the current block may be derived. The neighboring reference samples of the current block may include a sample adjacent to a left boundary of the current block with a size of $nW \times nH$ and a total of $2 \times nH$ samples neighboring a bottom-left side, a sample adjacent to a top boundary of the current block and a total of $2 \times nW$ samples neighboring a top-right side, and one sample neighboring a top-left side of the current block. Alternatively, neighboring reference samples of the current block may include top-side neighboring samples of a plurality of columns and left-side neighboring samples of a plurality of rows. In addition, the neighboring reference samples of the current block may include a total of nH samples adjacent to a right boundary of the current block with a size of $nW \times nH$, a total of nW samples adjacent to a bottom boundary of the current block, and one sample neighboring a bottom-right side of the current block.

However, some of the neighboring reference samples of the current block may not have been decoded yet or unusable. In this case, the image decoding apparatus 200 may construct neighboring reference samples which will be used for prediction by substituting the unusable samples with usable samples. Alternatively, the image decoding apparatus 200 may construct neighboring reference samples which will be used for prediction through interpolation of usable samples.

When neighboring reference samples are derived, (i) a prediction sample may be derived based on an average of the neighboring reference samples of the current block or interpolation based on the neighboring reference samples, or (ii) the prediction sample may be derived based on a reference sample that is present in a specific (prediction) direction from a prediction sample among the neighboring reference samples of the current block. The case of (i) may be referred to as a non-directional mode or non-angular mode, and the case of (ii) may be referred to as a directional mode or an angular mode. In addition, the prediction sample may be generated through interpolation between a second neighboring sample and a first neighboring sample which are present in the opposite direction to a prediction direction of the intra prediction mode of the current block based on a prediction sample of the current block among the neighboring reference samples. The above case may be referred to as linear interpolation intra prediction (LIP). Also, chroma prediction samples may be generated based on luma samples using a linear model. This case may be referred to as linear model (LM) mode. Also, a temporary prediction sample of the current block may be derived based on filtered neighboring reference samples, and a weighted sum of the existing neighboring reference samples, that is, at least one reference sample derived in accordance with the intra prediction mode among unfiltered neighboring reference samples and the temporary prediction sample, may be calculated to derive a prediction sample of the current block. This case may be referred to as position dependent intra prediction (PDPC). Also, a reference sample line with the highest prediction accuracy may be selected from multiple reference sample lines neighboring the current block, and a reference sample which is present in a prediction direction from the selected reference sample line may be used to derive a prediction sample. Here, intra prediction encoding may be performed by transmitting (signaling) information on the used reference sample line to the image decoding apparatus 200.

This case may be referred to as multi-reference line (MRL) intra prediction or MRL-based intra prediction. Also, the current block may be divided into vertical or horizontal sub-partitions, and intra prediction may be performed based on the same intra prediction mode. Here, neighboring reference samples may be derived and used for each of the sub-partitions. In other words, in this case, an intra prediction mode of the current block may be uniformly applied to the sub-partitions, and neighboring reference samples may be derived and used for each of the sub-partitions such that intra prediction performance can be improved in some cases. This prediction method may be referred to as intra sub-partition (ISP) or ISP-based intra prediction. The above-described intra prediction methods may be referred to as intra prediction types, distinguishably from the intra prediction mode in section 1.2. The intra prediction types may be referred to by various terms, such as an intra prediction techniques, additive intra prediction modes, or the like. For example, the intra prediction types (or additive intra prediction modes, etc.) may include at least one of LIP, PDPC, MRL, and ISP described above. General intra prediction methods other than the specific intra prediction types, LIP, PDPC, MRL, ISP, etc., may be referred to as normal intra prediction types. The normal intra prediction types may be generally applied when those specific intra prediction types are not applied, and prediction may be performed based on the foregoing intra prediction modes. Meanwhile, post-filtering may be performed on derived prediction samples as necessary.

Specifically, an intra prediction procedure may include an intra prediction mode/type determination operation, a neighboring reference sample derivation operation, and an intra prediction mode/type-based prediction sample derivation operation. In addition, a post-filtering operation may be performed on derived prediction samples as necessary.

Meanwhile, in addition to the above-described intra prediction types, affine linear weighted intra prediction (ALWIP) may be used. ALWIP may also be referred to as linear weighted intra prediction (LWIP), matrix weighted intra prediction (MIP), or matrix-based intra prediction (MIP). When MIP is applied to the current block, i) neighboring reference samples on which an averaging procedure has been performed may be used ii) to perform a matrix-vector-multiplication procedure, and iii) a horizontal/vertical interpolation procedure may be further performed as necessary to derive prediction samples of the current block. Intra prediction modes used for MIP may be different from intra prediction modes used in LIP, PDPC, MRL, and ISP intra prediction described above or intra prediction modes used in normal intra prediction. Intra prediction modes for MIP may be referred to as MIP intra prediction modes, MIP prediction modes, or MIP modes. For example, a matrix and offset used in the matrix-vector-multiplication may be set differently in accordance with an intra prediction mode for MIP. Here, the matrix may be referred to as a (MIP) weight matrix, and the offset may be referred to as an (MIP) offset vector or a (MIP) bias vector. A detailed MIP method will be described below.

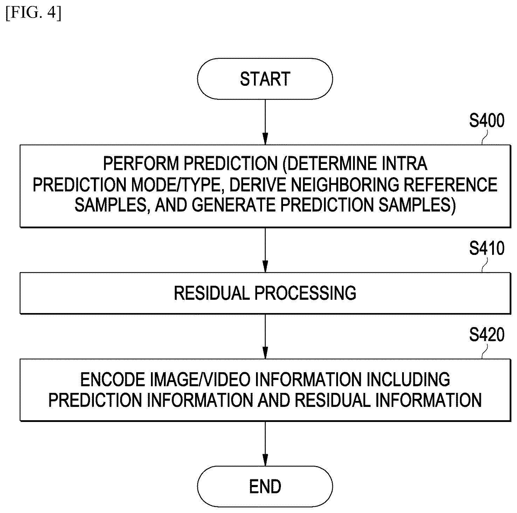

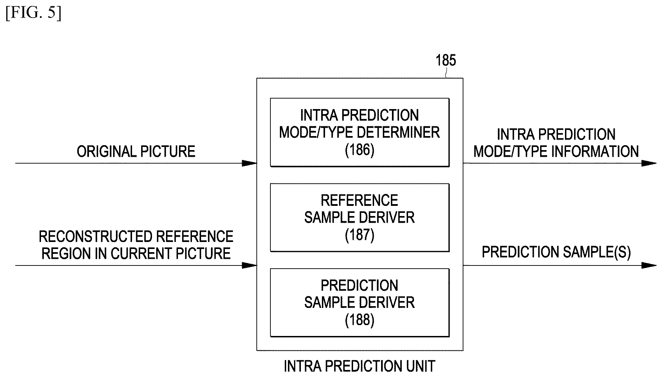

A block reconstruction procedure based on intra prediction and the intra prediction unit 185 of the image encoding apparatus 100 may schematically include, for example, FIGS. 4 and 5.

S400 may be performed by the intra prediction unit 185 of the image encoding apparatus 100, and S410 may be performed by the residual processor of the image encoding apparatus 100. Specifically, S410 may be performed by the subtractor 115 of the image encoding apparatus 100. In operation S420, prediction information may be derived by the intra prediction unit 185 and encoded by the entropy encoder 190. In operation S420, residual information may be derived by the residual processor and encoded by the entropy encoder 190. The residual information is information on the residual samples. The residual information may include information on quantized transform coefficients of the residual samples. As described above, the residual samples may be derived as transform coefficients through the transformer 120 of the image encoding apparatus, and the transform coefficients may be derived as quantized transform coefficients through the quantizer 130. Information of the quantized transform coefficients may be encoded by the entropy encoder 190 through a residual coding procedure.

The image encoding apparatus 100 perform intra prediction on a current block (S400). The image encoding apparatus 100 may derive an intra prediction mode/type for the current block, derive neighboring reference samples of the current block, and generate prediction samples in the current block based on the intra prediction mode/type and the neighboring reference samples. Here, the intra prediction mode/type determination procedure, the neighboring reference sample derivation procedure, and the prediction sample generation procedure may be performed simultaneously, or any one procedure may be performed before other procedures. For example, the intra prediction unit 185 of the image encoding apparatus 100 may include an intra prediction mode/type determiner 186, a reference sample deriver 187, and a prediction sample deriver 188. The intra prediction mode/type determiner 186 may determine an intra prediction mode/type for the current block. The reference sample deriver 187 may derive neighboring reference samples of the current block. The prediction sample deriver 188 may derive prediction samples of the current block. Meanwhile, although not shown in the drawing, when a prediction sample filtering procedure which will be described below is performed, the intra prediction unit 185 may further include a prediction sample filter (not shown). The image encoding apparatus 100 may determine a mode/type that is applied to the current block among a plurality of intra prediction modes/types. The image encoding apparatus 100 may compare rate-distortion (RD) costs of the intra prediction modes/types with each other and determine an optimal intra prediction mode/type for the current block.

Meanwhile, the image encoding apparatus 100 may perform a prediction sample filtering procedure. Prediction sample filtering may be referred to as post filtering. Some or all of the prediction samples may be filtered through the prediction sample filtering procedure. In some cases, the prediction sample filtering procedure may be omitted.

The image encoding apparatus 100 may generate residual samples for the current block based on the (filtered) prediction samples or filtered prediction samples (S410). The image encoding apparatus 100 may compare original samples of the current block with the prediction samples to derive the residual samples.

The image encoding apparatus 100 may encode image information including information on the intra prediction (prediction information) and residual information of the residual samples (S420). The prediction information may include the intra prediction mode information and the intra prediction type information. The image encoding apparatus 100 may output the encoded image information in the form of a bitstream. The output bitstream may be forwarded to the image decoding apparatus 200 via a storage medium or a network.

The residual information may include residual coding syntax which will be described below. The image encoding apparatus 100 may derive quantized transform coefficients by transforming/quantizing the residual samples. The residual information may include information on the quantized transform coefficients.

Meanwhile, as described above, the image encoding apparatus 100 may generate a reconstructed picture (including reconstructed samples and a reconstructed block). To this end, the image encoding apparatus 100 may derive (modified) residual samples by dequantizing/inversely transforming the quantized transform coefficients. The reason for transforming/quantizing residual samples and then performing dequantization/inverse transform is to derive the same residual samples as residual samples derived by the image decoding apparatus 200. The image encoding apparatus 100 may generate a reconstructed block including reconstructed samples for the current block based on the prediction samples and the (modified) residual samples. A reconstructed picture for the current picture may be generated based on the reconstructed block. As described above, an in-loop filtering procedure and the like may be further applied to the reconstructed picture.

A video/image decoding procedure based on intra prediction and the intra prediction unit of the image decoding apparatus 200 may schematically include, for example, the following.

The image decoding apparatus 200 may perform operations corresponding to the operations performed by the image encoding apparatus 100.

S600 to S620 may be performed by the intra prediction unit 265 of the image decoding apparatus 200, and prediction information of S600 and residual information of S630 may be acquired from a bitstream by the entropy decoder 210 of the image decoding apparatus 200. The residual processor of the image decoding apparatus 200 may derive residual samples for the current block based on the residual information. Specifically, the dequantizer 220 of the residual processor may derive transform coefficients by performing dequantization based on quantized transform coefficients which are derived from the residual information, and the inverse transformer 230 of the residual processor may derive residual samples for the current block by performing an inverse transform on the transform coefficients. S640 may be performed by the adder 235 or the reconstructor of the image decoding apparatus 200.

Specifically, the image decoding apparatus 200 may derive an intra prediction mode/type for the current block based on the received prediction information (intra prediction mode/type information) (S600). The image decoding apparatus 200 may derive neighboring reference samples of the current block (S610). The image decoding apparatus 200 may generate prediction samples in the current block based on the intra prediction mode/type and the neighboring reference samples (S620). In this case, the image decoding apparatus 200 may perform a prediction sample filtering procedure. Prediction sample filtering may be referred to as post filtering. Some or all of the prediction samples may be filtered through the prediction sample filtering procedure. In some cases, the prediction sample filtering procedure may be omitted.

The image decoding apparatus 200 may generate residual samples for the current block based on the received residual information. The image decoding apparatus 200 may generate reconstructed samples for the current block based on the prediction samples and the residual samples and derive a reconstructed block including the reconstructed samples (S630). A reconstructed picture for the current picture may be generated based on the reconstructed block. As described above, an in-loop filtering procedure and the like may be further applied to the reconstructed picture.

Here, the intra prediction unit 265 of the image decoding apparatus 200 may include an intra prediction mode/type determiner 266, a reference sample deriver 267, and a prediction sample deriver 268. The intra prediction mode/type determiner 266 may determine the intra prediction mode/type for the current block based on the intra prediction mode/type information generated and signaled by the intra prediction mode/type determiner 186 of the image encoding apparatus 100. The reference sample deriver 266 may derive the neighboring reference samples of the current block. The prediction sample deriver 267 may derive the prediction samples of the current block. Meanwhile, although not shown in the drawing, when the above-described prediction sample filtering procedure is performed, the intra prediction unit 265 may further include a prediction sample filter (not shown).

The intra prediction mode information may include flag information (e.g., intra_luma_mpm_flag) indicating, for example, whether a most probable mode (MPM) or a remaining mode is applied to the current block. When the MPM is applied to the current block, the intra prediction mode information may further include index information (e.g., intra_luma_mpm_idx) indicating one of the intra prediction mode candidates (MPM candidates). The intra prediction mode candidates (MPM candidates) may constitute an MPM candidate list or an MPM list. When the MPM is not applied to the current block, the intra prediction mode information may further include remaining mode information (e.g., intra_luma_mpm_remainder) indicating one of intra prediction modes other than the intra prediction mode candidates (the MPM candidates). The image decoding apparatus 200 may determine an intra prediction mode of the current block based on the intra prediction mode information. For the above-described MIP, a separate MPM list may be generated.

In addition, the intra prediction type information may be generated in various forms. As an example, the intra prediction type information may include intra prediction type index information indicating one of the intra prediction types. As another example, the intra prediction type information may include at least one of reference sample line information (e.g., intra_luma_ref_idx) indicating whether MRL is applied to the current block and which reference sample line is used when MRL is applied, ISP flag information (e.g., intra_subpartitions_mode_flag) indicating whether ISP is applied to the current block, ISP type information (e.g., intra_subparititions_split_flag) indicating partition types of sub-partitions when ISP is applied, and flag information indicating whether PDPC is applied or flag information indicating whether LIP is applied. In addition, the intra prediction type information may include an MIP flag indicating whether MIP is applied to the current block.

The intra prediction mode information and/or the intra prediction type information may be encoded/decoded using a coding method described in the present document. For example, the intra prediction mode information and/or the intra prediction type information may be encoded/decoded through entropy coding (e.g., context-adaptive binary arithmetic coding (CABAC) or context-adaptive variable-length coding CAVLC) based on truncated (rice) binary code.

Intra template matching prediction (IntraTMP)

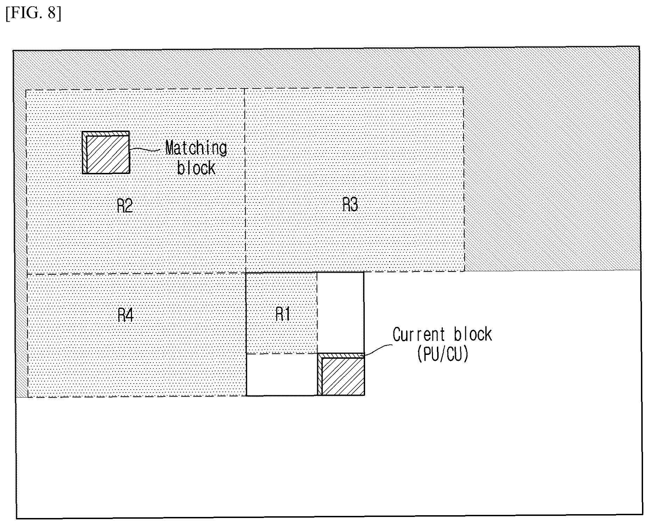

IntraTMP is a special intra prediction mode for copying (deriving) an optimal prediction block from a reconstructed part of a current frame, whose L-shaped template corresponds to a current template. Within a predefined search region, an encoder searches for the most similar template to a current template in a reconstructed part of a current frame and uses a corresponding block (matching block of FIG. 8) as a prediction block. The encoder may transmit that an IntraTMP mode is used, and the same prediction operation may be performed at a decoder side.

A prediction signal may be generated by matching an L-shaped causal neighbor of a current block with another block in a predefined search region in FIG. 8. In FIG. 8, R1 is a current coding tree unit (CTU), R2 is a top-left CTU, R3 is an above CTU, and R4 is a left CTU.

A sum of difference (SAD) may be used as a cost function. In each region, the decoder searches for a template with the smallest SAD for the current block and uses a block corresponding a found template as a prediction block.

Dimensions (SearchRange w and SearchRange h) of all regions may be set proportional to the block dimensions (BlkW and BlkH) to perform a fixed number of SAD comparisons per pixel. In other words, the dimensions of all the regions may be set as shown in expression 1.

[Expression 1]

$$SearchRange_w = a * BlkW$$

$$SearchRange_h = a * BlkH$$

In expression 1, "$\alpha$" is a constant for controlling the gain/complexity trade-off. For example, "$\alpha$" may be 5.

To speed up the template matching process, the search ranges of all search regions may be subsampled by a factor or 2. This may lead to a reduction in the number of template matching searches to 1/4. After the best match is found, a refinement process may be performed. The refinement process may be performed through a second template matching search around the best match using a reduced range. The reduced range may be defined as min(BlkW, BlkH)/2.

An intra template matching tool may be activated for coding units (CUs) with a size of 64 or less in width and height. The maximum CU size for intra template matching is variable.

An intraTMP mode may be signaled at a CU level through a dedicated flag when decoder-side intra mode derivation (DIMD) is not used for a current CU. Here, the dedicated flag may indicate whether an intraTMP mode is applied.

IntraTMP derived block vector candidates for intra block copy (IBC)

A block vector (BV) derived through intraTMP (intraTMP BV) may be used for IBC. Stored intraTMP BVs of neighboring blocks may be used as spatial BV candidates in generating an IBC candidate list along with IBC BVs.

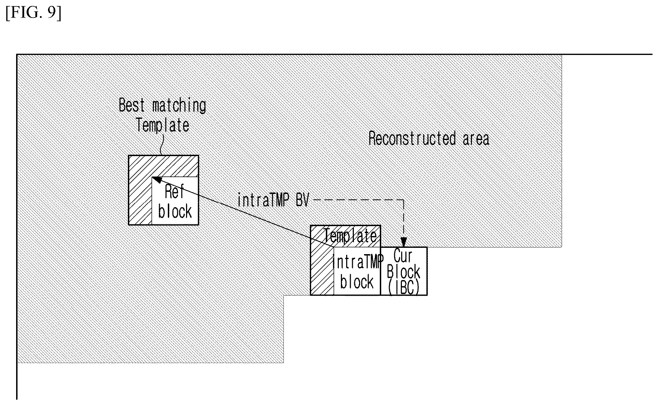

An intraTMP BV may be stored in an IBC BV buffer. As shown in FIG. 9, a current IBC block may use all of IBC BVs and intraTMP BVs of neighboring blocks as BV candidates for an IBC BV candidate list.

IntraTMP BVs may be added to the IBC BV candidate list as spatial candidates.

Embodiments

The present disclosure proposes a template search region in intraTMP technology. Also, the present disclosure proposes a method of generating or deriving a new sample for an unusable (unavailable) sample position in a reference block and a template area of the reference block (reference template area). According to embodiments proposed in the present disclosure, the performance of intraTMP can be improved.

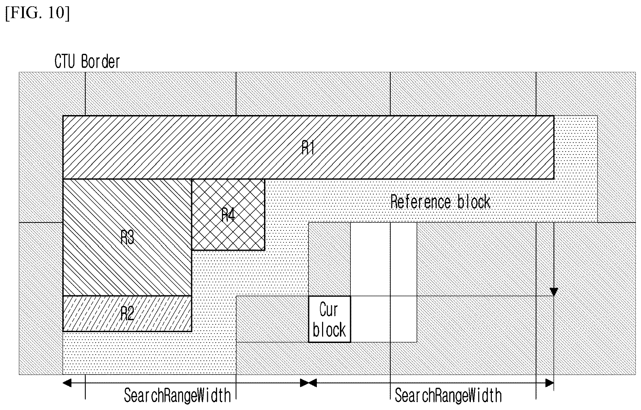

In intraTMP, as shown in FIG. 10, specific regions R1, R2, R3, and R4 may be set as template search regions, and a search may be performed for each search region. In this case, the range of each search region may vary depending on a width and height of a current block or a position of the current block. In addition, the range of each search region may be determined by an agreement between the encoder and the decoder.

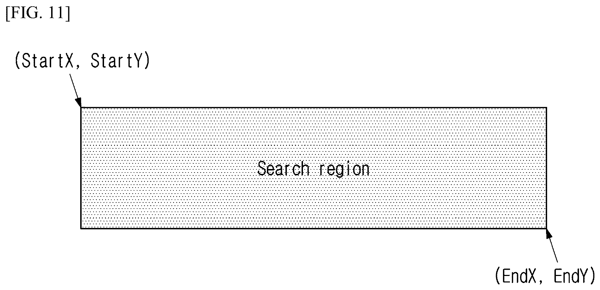

When template searches are performed by utilizing search regions, restrictions may be applied to the range of each search region (i.e., a search range). For example, as shown in FIG. 11, when a search region is expressed with a position (StartX, StartY) and a position (EndX, EndY), (StartX, StartY) may be limited to values greater than or equal to the (minimum) template size. For example, the template size may be a certain value of 4. (StartX, StartY) represents a top-left position of the search region. StartX indicates a horizontal position of the top-left position of the search region, and StartY indicates a vertical position of the top-left position of the search region. (EndX, EndY) represents a bottom-right position of the search region. EndX indicates a horizontal position of the bottom-right position of the search region, and EndY indicates a vertical position of the bottom-right position of the search region. As another example, as shown in FIG. 11, when a search region is expressed with a position (StartX, StartY), (EndX, EndY) may be limited to a value of (picture width - block width) or less and a value of (picture height - block height) or less, respectively.

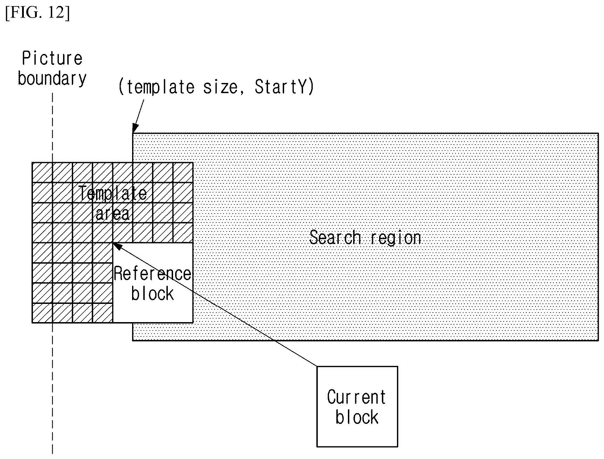

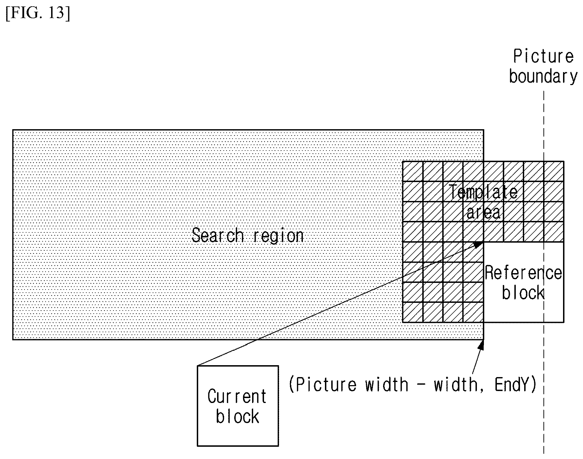

These restrictions prevent excessive template searches, providing the effect of lowering the complexity of an encoding and decoding process. On the other hand, these restrictions may degrade the prediction performance of intraTMP. For example, as shown in FIG. 12, a reference block deviating from the search region to the left may be the most similar block to the current block, and thus the foregoing restrictions on a search region (i.e., a search range) may degrade the prediction performance of intraTMP. As another example, as shown in FIG. 13, a reference block falling outside the search region to the right may be the most similar block to the current block, and thus the foregoing restrictions on a search region (i.e., a search range) may degrade the prediction performance of intraTMP.

Various embodiments for addressing the issue of degraded prediction performance of intraTMP due to restrictions on a search region will be described below. An image encoding method described below may be performed by the image encoding apparatus 100, and an image decoding method described below may be performed by the image decoding apparatus 200.

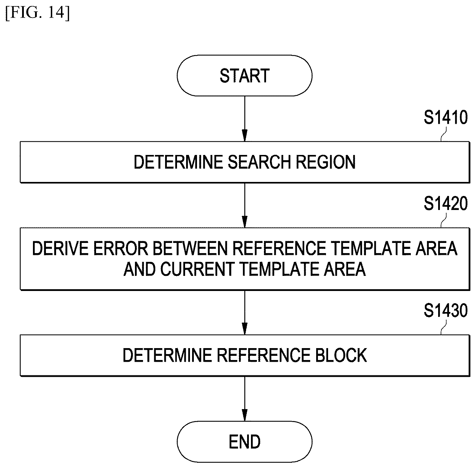

FIG. 14 is a flowchart illustrating an image encoding/decoding method according to an embodiment of the present disclosure.

Referring to FIG. 14, a search region related to a current block may be determined (S1410). The search region may be plural in number and uniformly determined in advance by the image encoding apparatus 100 and the image decoding apparatus 200. A size of the search region, that is, a search range, may also be uniformly determined in advance by the image encoding apparatus 100 and the image decoding apparatus 200. For example, the search range may be determined based on a size of the current block as shown in expression 1.

An error between a reference template area and a current template area may be derived (S1420). The reference template area is a template area for each reference block located in each search region and may be a template area corresponding to each reference block or a template area of each reference block. The current template area is a template area of the current block and may be a template area corresponding to the current block. The error may be derived based on a difference between the current template area and the reference template area. The error may also be referred to as "cost," "difference," "template cost," and the like. In other words, in the present disclosure, "error," "cost," "difference," "template cost," etc., may have the same meaning. The error may be derived based on at least one of sum of difference (SAD), sum of transformed difference (SATD), sum of squared error (SSE), mean-removed sum of difference (MR-SAD), mean-removed sum of squared error (MR-SSE), and mean-removed sum of transformed difference (MR-SATD).

A reference block of the current block may be determined based on the errors (S1430). For example, a (optimal) reference template area with the smallest error relative to the current template area may be determined among reference template areas, and a reference block corresponding to the determined reference template area may be determined as a reference block of the current block. Here, the reference block of the current block may be a reference block used to predict the current block.

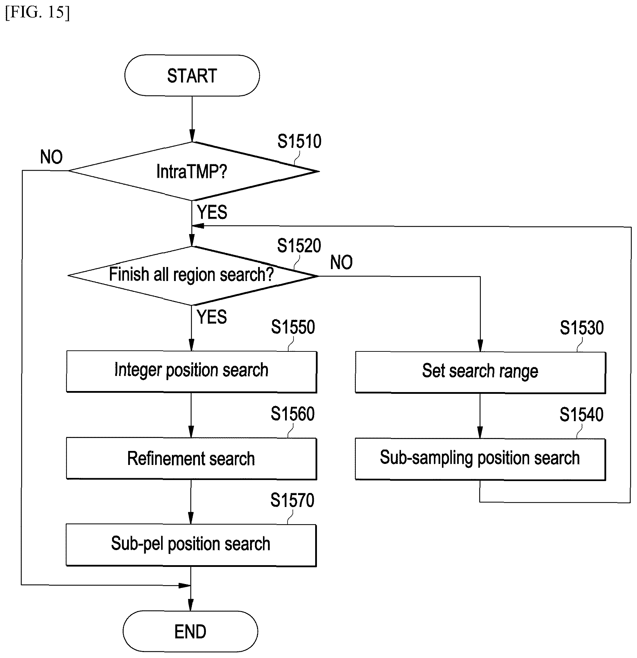

FIG. 15 is a flowchart illustrating an example of an image encoding/decoding method of searching for an optimal reference template area.

Referring to FIG. 15, a flag indicating whether intraTMP is applied (intraTMP flag) may be encoded in a bitstream, and the intraTMP flag may be acquired from the bitstream. When the intraTMP flag indicates that intraTMP is applied (S1510), a search may be performed in a search region.

It may be determined whether a search has been finished in all certain search regions (S1520). When a search has not been finished in a search region, a search range for the search region may be set (S1530). A search range setting may vary depending on a width and height of the current block, a position of the current block, and the like. Alternatively, the search range may be set in advance by an agreement between the image encoding apparatus 100 and the image decoding apparatus 200.

While a reference block is moved in sub-sampling units in the defined search range, an error between a neighboring template of the current block (a current template area) and a neighboring template of a reference template (a reference template area) may be derived (S1540). Operation S1540 may be a process of deriving an error between a reference template area corresponding to a reference block at each movement position and a current template area while moving the reference block in units of a plurality of samples. During the search process, BV positions of a reference block may be added to a candidate list in increasing order of error. A size of the candidate list may be defined by an agreement between the image encoding apparatus 100 and the image decoding apparatus 200. For example, the size of the candidate list may be 1, 4, 15, 19, or 30. An error may be derived based on at least one of SAD, SATD, SSE, MR-SAD, MR-SSE, and MR-SATD.

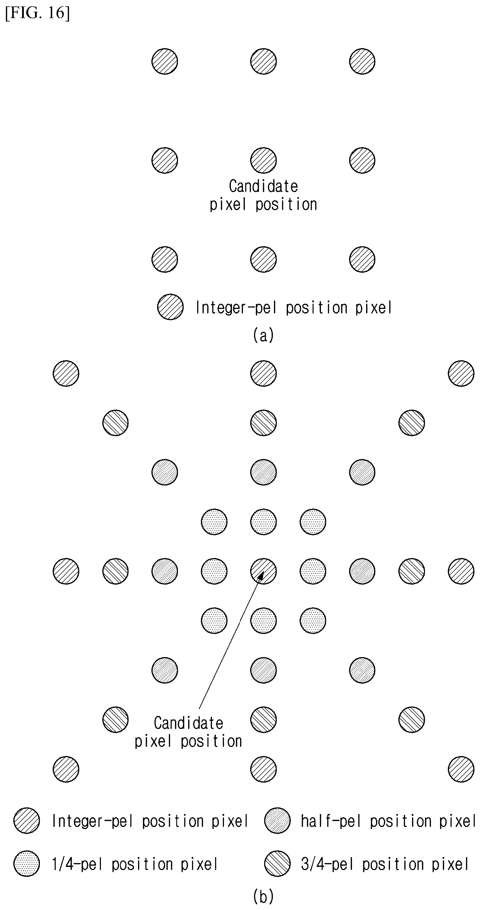

When a search has been finished in all the certain search regions, a search for position refinement may be performed in neighboring positions of each candidate in the candidate list (S1550 and S1560). For example, while the reference block pixel is moved by pixel within a search range defined between the image encoding apparatus 100 and the image decoding apparatus 200, an error between a template neighboring on the current block (current template area) and a template neighboring on a candidate reference block (reference template area) may be derived. This refinement search may have a search range encompassing eight neighboring positions centered around a candidate reference block position (candidate pixel position) as shown in FIG. 16A. In addition, during the search process, BV positions of a reference block may be added to a candidate list in increasing order of error. An error may be derived based on at least one of SAD, SATD, SSE, MR-SAD, MR-SSE, and MR-SATD.

A search for a neighboring sub-pel position may be performed for candidates in the candidate list (S1570). As shown in FIG. 16B, a sub-pel search may be performed in units of 1/4, 1/2, or 3/4 positions, and search directions may be eight neighboring directions centered around a candidate reference block position (candidate pixel position). Whether to perform a sub-pel search may be signaled or determined by an agreement between the image encoding apparatus 100 and the image decoding apparatus 200.

Embodiment 1

Embodiment 1 relates to a method of changing or removing the restrictions on intraTMP search regions.

There may be no restriction on a start position of an intraTMP search region. For example, each of StratX and StratY of FIG. 11 may have a value less than a certain template size. Meanwhile, there may be no restriction on an end position of an intraTMP search region. For example, EndX of FIG. 11 may have a value of (picture width - block width) or more, and EndY may have a value of (picture height - block height) or more.

As an example of embodiment 1, StartX, StartY, EndX, and EndY of a search region may be defined as shown in table 1.

[Table 1]

| |
|---|
| EndX = std::min( iCurrX + searchRangeWidth , PicWidth - iBlkWidth )<br>StartX = std::max( iTemplateSize, iCurrX - searchRangeWidth )<br>EndY = iCurrY - iBlkHeight<br>StartY = std::max( iTemplateSize, iCurrY - searchRangeHeight ) |

In table 1 and tables 2 to 4 which will be described below, iTemplateSize indicates a certain template size, iCurrY indicates a y position (vertical position) of the current block, and iCurrX indicates an x position (horizontal position) of the current block. iTemplateSize may be 4. Also, iBlkHeight may indicate a height of the current block, iBlkWidth may indicate a width of the current block, and TMP_SEARCH_RANGE_MULT_FACTOR may indicate a value required for calculating a search range. For example, TMP_SEARCH_RANGE_MULT_FACTOR may be 5. Also, searchRangeHeight indicates TMP_SEARCH_RANGE_MULT_FACTOR * uiBlkWidth, searchRangeWidth indicates TMP_SEARCH_RANGE_MULT_FACTOR * uiBlkHeight, PicHeight indicates a height of the picture, and PicWidth indicates a width of the picture. Also, stuRsAddrY indicates a y position (vertical position) of the current CTU, stuRsAddrX indicates an x position (vertical position) of the current CTU, offsetLCUY indicates iCurrY-ctuRsAddrY, and offsetLCUX indicates iCurrY-ctuRsAddrX.

In table 1, StartX may be std::max($\alpha$, iCurrX - searchRangeWidth). Therefore, the top-left position StartX of the search region may be determined based on the position iCurrX of the current block and the certain search range searchRangeWidth. Since α may be a real number satisfying 0≤α≤iTemplateSize, StartX which is the horizontal position of the top-left position of the search region may have a value less than the certain template size.

In table 1, EndX may be std::min(iCurrX + searchRangeWidth, PicWidth - β). Therefore, the bottom-right position EndX of the search region may be determined based on the position iCurrX of the current block and the certain search range searchRangeWidth. Since β may be a real number satisfying 0≤β≤iBlkWidth, EndX which is the horizontal position of the bottom-right position of the search region may have a value exceeding a size difference between the current picture and the current block.

As another example of embodiment 1, StartX, StartY, EndX, and EndY of a search region may be defined as shown in table 2.

[Table 2]

| EndX = (iCurrX - offsetLCUX - iBlkWidth) |
| StartX = std::max( iTemplateSize, iCurrX - searchRangeWidth) |
| StartY = std::max( iTemplateSize, iCurrY - iBlkHeight - offsetLCUY ) |
| EndY = iCurrY |

In table 2, StartX may be std::max(α, iCurrX - searchRangeWidth). Therefore, the top-left position StartX of the search region may be determined based on the position iCurrX of the current block and the certain search range searchRangeWidth. Since α may be a real number satisfying 0≤α≤iTemplateSize, StartX which is the horizontal position of the top-left position of the search region may have a value less than the certain template size.

In table 2, StartY may be std::max(α, iCurrY - iBlkHeight - offsetLCUY). Therefore, the top-left position StartY of the search region may be determined based on the position iCurrY of the current block, the size iBlkHeight of the current block, and the position offsetLCUY of the current CTU (offsetLCUY = iCurrY - ctuRsAddrY). Since α may be a real number satisfying 0≤α≤iTemplateSize, StartY which is the vertical position of the top-left position of the search region may have a value less than the certain template size.

As another example of embodiment 1, StartX, StartY, EndX, and EndY of a search region may be defined as shown in table 3.

[Table 3]

| StartX = std::max( iTemplateSize, iCurrX - searchRangeWidth) |
| EndX = iCurrX - offsetLCUX - iBlkWidth |
| StartY = iCurrY + 1; |
| EndY = std::min( PicHeight - iBlkHeight, iCurrY - offsetLCUY + getCTUSize - iBlkHeight) |

In table 3, EndY may be std::(PicHeight - β, iCurrY - offsetLCUY + getCTUSize - iBlkHeight). Therefore, the bottom-right position EndY of the search region may be determined based on the position iCurrY of the current block, the size iBlkHeight of the current block, the height PicHeight of the current picture, the position (offsetLCUY = iCurrY - ctuRsAddrY) of the current CTU, and the size getCTUSize of the current CTU. Since β may be a real number satisfying 0≤β≤iBlkWidth, EndY which is the horizontal position of the bottom-right position of the search region may have a value exceeding a size difference between the current picture and the current block.

In table 3, StartX may be std::( α, iCurrY - searchRangeWidth). Therefore, the top-left position StartX of the search region may be determined based on the position iCurrX of the current block and the certain search range searchRangeWidth. Since α may be a real number satisfying 0≤α≤iTemplateSize, StartX which is the horizontal position of the top-left position of the search region may have a value less than the certain template size.

As another example of embodiment 1, StartX, StartY, EndX, and EndY of a search region may be defined as shown in table 4.

[Table 4]

| StartY = std::max(iTemplateSize, iCurrY - offsetLCUY - iBlkHeight + 1) |
| EndY = iCurrY - iBlkHeight |
| StartX = std::max(iTemplateSize, iCurrX - offsetLCUX - iBlkWidth + 1 ) |
| EndX = iCurrX - iBlkWidth |

In table 4, StartY may be std::max(α, iCurrY - offsetLCUY - iBlkHeight + 1). Therefore, the top-left position StartY of the search region may be determined based on the position iCurrY of the current block, the size iBlkHeight of the current block, and the position of the current CTU (offsetLCUY = iCurrY - ctuRsAddrY). Since α may be a real number satisfying 0≤α≤iTemplateSize, StartY which is the vertical position of the top-left position of the search region may have a value less than the certain template size.

In table 4, StartX may be std::max(α, iCurrX - offsetLCUX - iBlkHeight + 1). Therefore, the top-left position StartX of the search region may be determined based on the position iCurrX of the current block, the size iBlkweight of the current block, and the position of the current CTU (offsetLCUX iCurrX - ctuRsAddrX). Since α may be a real number satisfying 0≤α≤iTemplateSize, StartX which is the horizontal position of the top-left position of the search region may have a value less than the certain template size.

mvMin, mvMax, mvMax, and mvMin may be derived from StartX, StartY, EndX, and EndY defined in the examples of tables 1 to 4 as shown in table 5.

[Table 5]

$$mvXMin = StartX - iCurrX;$$
$$mvXMax = EndX - iCurrX;$$
$$mvYMax = EndY - iCurrY;$$
$$mvYMin = StartY - iCurrY;$$

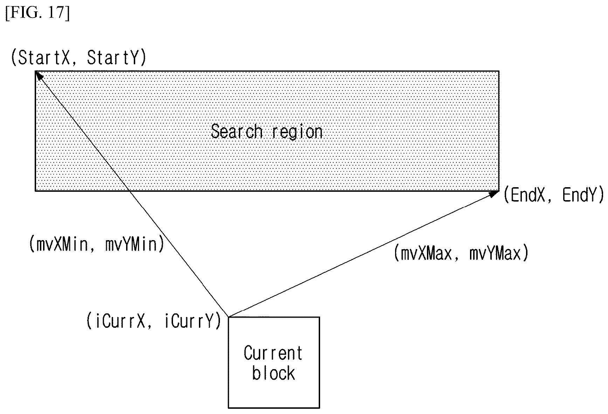

In table 5 and FIG. 17, (mvXmin, mvYMin) may be a BV indicating a start position (top-left position) of a search region, and (mvXmax, mvYMax) may be a BV indicating an end position (bottom-right position) of the search region.

Embodiment 2

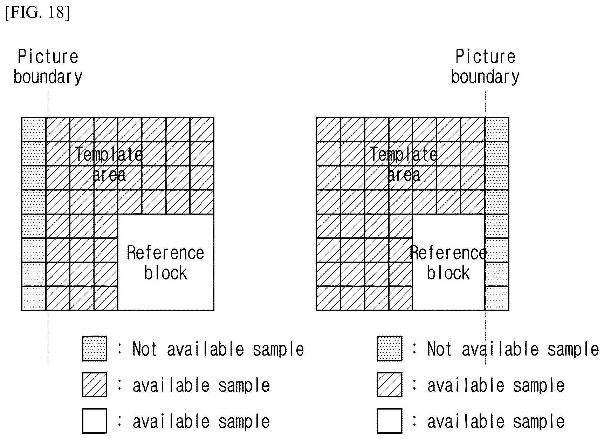

When the restrictions on a search region are changed or removed according to embodiment 1, a previously reconstructed sample may not exist during a process of deriving an error between a current template area and a reference template area. In other words, as shown in FIG. 18, there may be samples falling outside a picture boundary or a CTU boundary among samples in a reference template area or a reference block, and previously reconstructed sample values for these samples may not exist. Here, samples with previously reconstructed sample values may be referred to as "available samples," and samples without previously reconstructed sample values may be referred to as "unavailable samples,"

Embodiment 2 relates a method of deriving a value of an unavailable sample from a value of an available sample.

As an example of embodiment 2, when some samples in a reference template area and/or a reference block are unavailable samples, values of the unavailable samples may be derived by padding the unavailable sample positions with available samples.

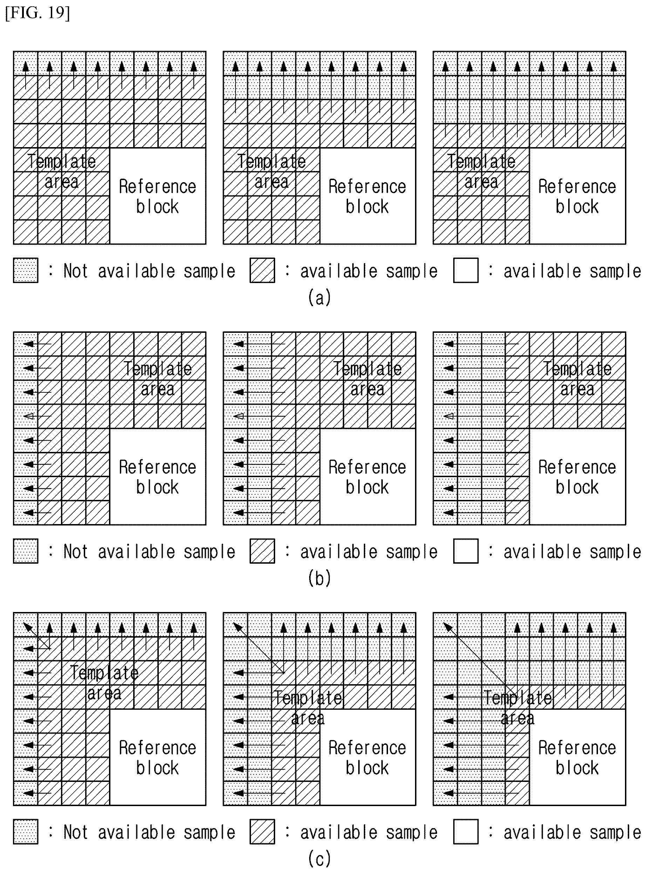

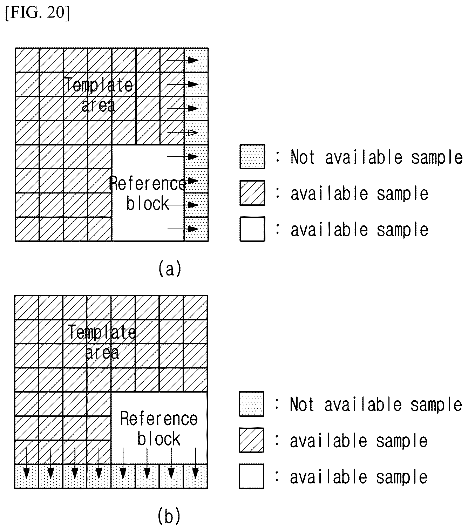

For example, as shown in FIG. 19A, when unavailable samples exist above a reference template area, values of the unavailable samples may be derived by vertically padding the unavailable sample positions with the closest available samples. As another example, as shown in FIG. 19B, when unavailable samples exist to the left of a reference template area, values of the unavailable samples may be derived by horizontally padding the unavailable sample positions with the closest available samples. As another example, as shown in FIG. 19C, when unavailable samples exist to the left and above a reference template area, values of the unavailable samples may be derived by vertically and horizontally padding the unavailable sample positions with the closest available samples. A value of an unavailable sample located at a top-left position may be derived by padding the unavailable sample position with the closest available sample. As another example, as shown in FIG. 20A, when unavailable samples exist to the right of a reference template area and a reference block, values of the unavailable samples may be derived by horizontally padding the unavailable sample positions with the closest available samples. Here, the available samples used for padding may exist in the reference template area and the reference block. As another example, as shown in FIG. 20B, when unavailable samples exist below a reference template area and a reference block, values of the unavailable samples may be derived by vertically padding the unavailable sample positions with the closest available samples. Here, the available samples used for padding may exist in the reference template area and the reference block. Although padding has been described above using L-shaped templates, padding may be applied to above-shaped templates or left-shaped templates in the same manner.

As another example of embodiment 2, when some samples in a reference template area and/or a reference block are unavailable samples, values of the unavailable samples may be derived by averaging values of available samples.

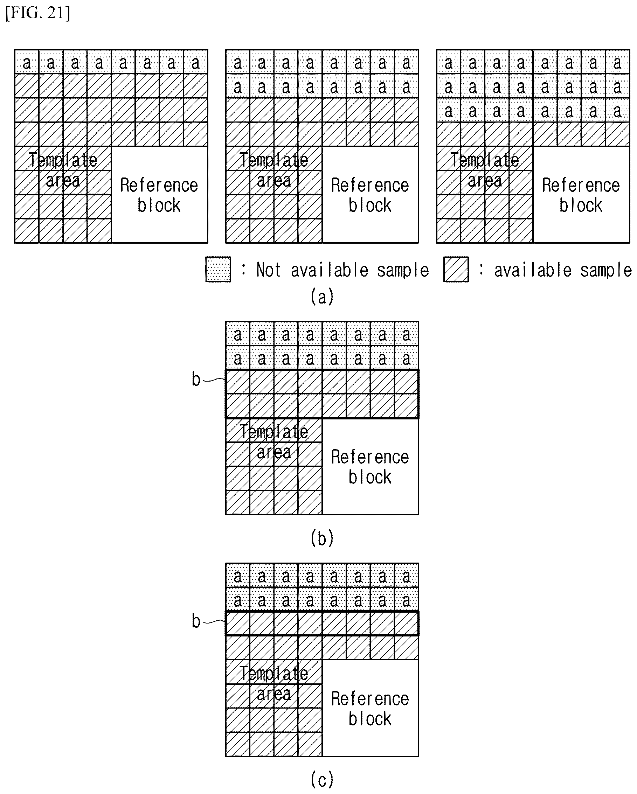

For example, as shown in FIG. 21A, when unavailable samples exist above a reference template area, values of the unavailable samples may be derived from an average of available samples. In FIGS. 21 to 25, "a" indicates an average value of available samples and may be a real number. "b" may indicate an available sample used for calculating an average value. An average value may be an average of available samples in the reference template area or an average of top available samples (FIG. 21B) in the reference template area. Alternatively, an average value may be an average of the closest available samples (FIG. 21C) to an unavailable sample.

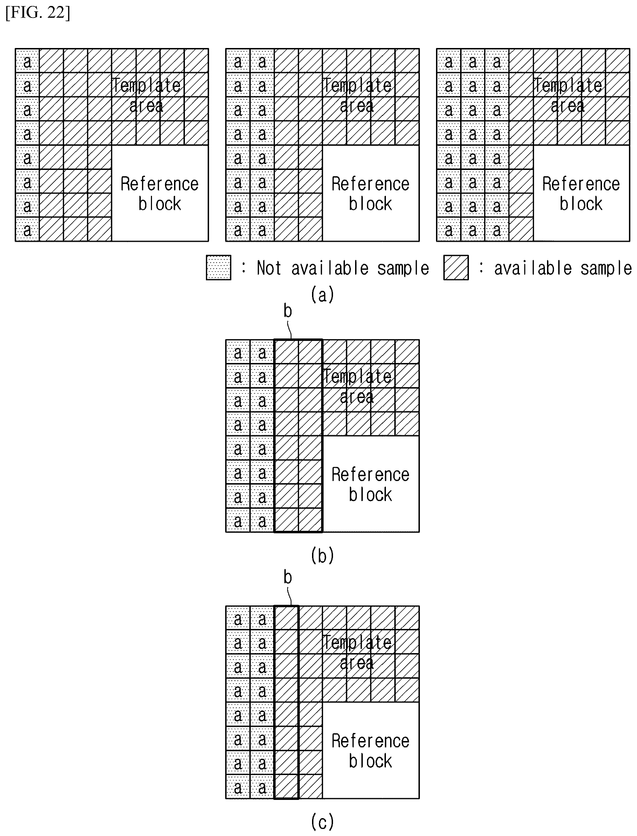

As another example, as shown in FIG. 22A, when unavailable samples exist to the left of a reference template area, values of the unavailable samples may be derived from an average of available samples. An average value may be an average of available samples in the reference template area or an average of left available samples (FIG. 22B) in the reference template area. Alternatively, an average value may be an average of the closest available samples (FIG. 22C) to an unavailable sample.

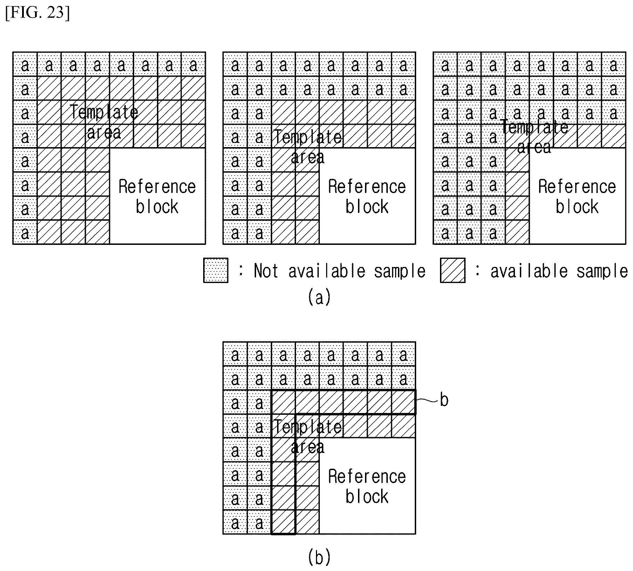

As another example, as shown in FIG. 23A, when unavailable samples exist to the left and above a reference template area, values of the unavailable samples may be derived from an average of available samples. An average value may be an average of available samples in the reference template area or an average of the closest available samples (FIG. 23B) to an unavailable sample.

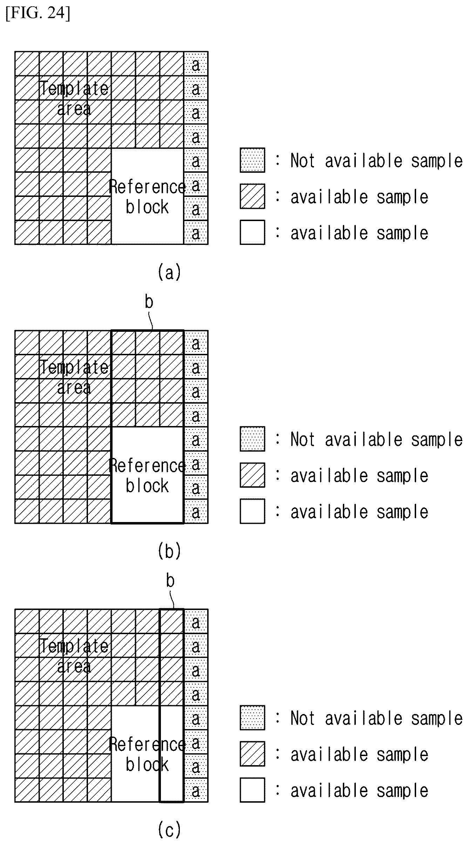

As another example, as shown in FIG. 24A, when unavailable samples exist to the right of a reference template area, values of the unavailable samples may be derived from an average of available samples. An average value may be an average of available samples in the reference template area and a reference block or an average of right available samples (FIG. 24B) in the reference template area and the reference block. Alternatively, an average value may be an average of the closest available samples (FIG. 24C) to an unavailable sample.

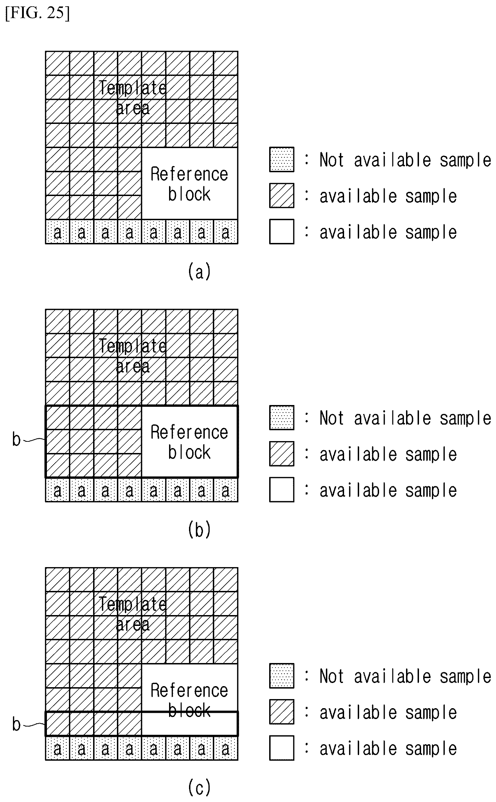

As another example, as shown in FIG. 25A, when unavailable samples exist below a reference template area, values of the unavailable samples may be derived from an average of available samples. An average value may be an average of available samples in the reference template area and a reference block or an average of bottom available samples (FIG. 25B) in the reference template area and the reference block. Alternatively, an average value may be an average of the closest available samples (FIG. 25C) to an unavailable sample.

Although padding has been described above using L-shaped templates, padding may be applied to above-shaped templates or left-shaped templates in the same manner.

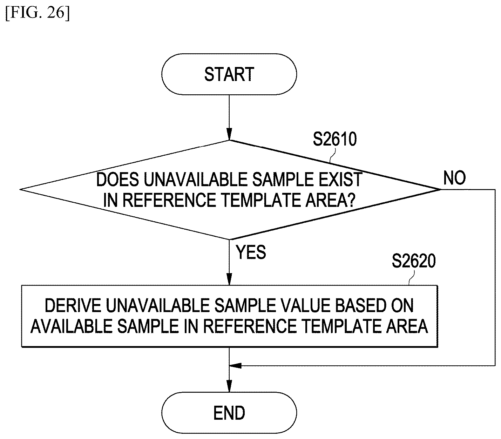

FIG. 26 is a diagram illustrating an example of an image encoding/decoding method according to embodiment 2.

Referring to FIG. 26, it may be determined whether at least one sample is unusable (unavailable) in a reference template area (S2610). When there is an unavailable sample in the reference template area, a value of the unavailable sample may be derived based on at least one usable sample (available sample) in the reference template area (S2620). For example, values of unavailable samples may be derived by padding the unavailable sample positions with available samples or derived based on an average value of available samples. Also, available samples used for deriving an unavailable sample value may be all available samples in the reference template area or available samples that are present at a specific position (top, left, top-left, right, or bottom) in the reference template area. Alternatively, available samples used for deriving an unavailable sample value may be the closest available samples to the unavailable sample.

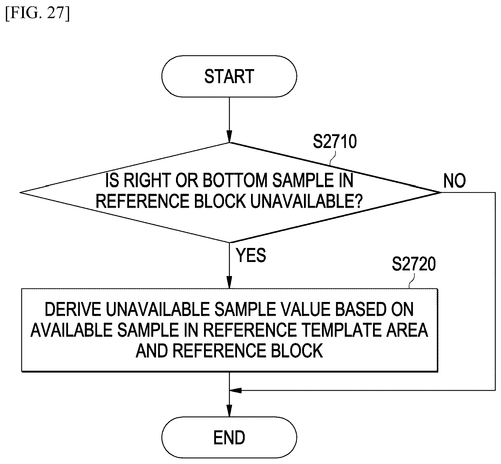

FIG. 27 is a diagram illustrating another example of an image encoding/decoding method according to embodiment 2.

Referring to FIG. 27, it may be determined whether right samples or bottom samples in a reference template area are unavailable samples (S2710). When right samples or bottom samples in the reference template area are unavailable samples, values of the unavailable samples may be derived based on available samples in the reference template area and/or a reference block (S2720). For example, values of unavailable samples may be derived by padding the unavailable sample positions with available samples or derived based on an average value of available samples. When a value of an unavailable sample is derived through padding, available samples in the reference block may be used for padding. When a value of an unavailable sample is derived through average value derivation, available samples in the reference template area and the reference block may be used for average value derivation. Available samples used for deriving an unavailable sample value may be all available samples in the reference template area and/or the reference block or may be available samples that are present at a specific position (bottom) in the reference template area and/or the reference block. Alternatively, available samples used for deriving an unavailable sample value may be the closest available samples to the unavailable sample.

In embodiment 2, a method of deriving a value of an unavailable sample has been described regarding all cases where an unavailable sample exists above a reference template area, an unavailable sample exists to the left of a reference template area, an unavailable sample exists to the right of a reference template area and a reference block, and an unavailable sample exists below a reference template area and a reference block. However, the method of deriving a value of an unavailable sample may be limitingly performed only when an unavailable sample exists above a reference template area and when an unavailable sample exists to the left of a reference template area.

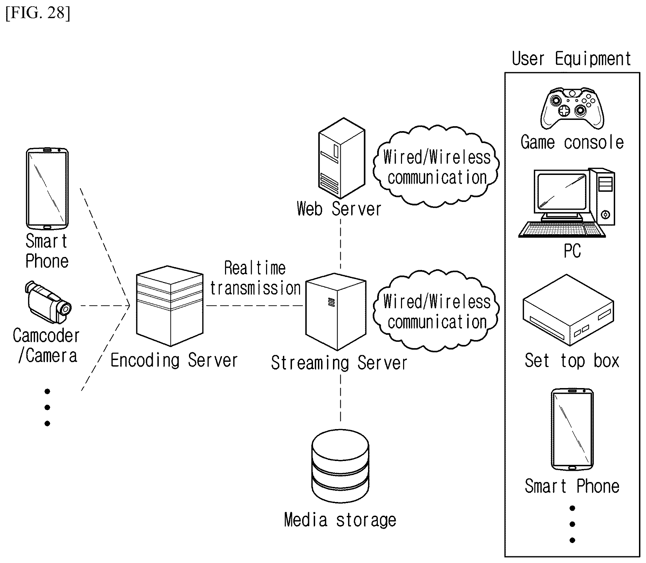

FIG. 28 is a view showing a content streaming system, to which an embodiment of the present disclosure is applicable.

As shown in FIG. 28, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

[Industrial Applicability]

The embodiments of the present disclosure may be used to encode or decode an image.

**Claims**

1. An image decoding method performed by an image decoding apparatus, the method comprising:

   determining a search region related to a current block;
   deriving errors between reference template areas which are template areas of reference blocks in the search region, and a current template area which is a template area of the current block; and
   determining a reference block of the current block based on the errors.

2. The image decoding method of claim 1, wherein a top-left position of the search region is determined based on a position of the current block and a certain search range.

3. The image decoding method of claim 2, wherein the top-left position of the search region is determined additionally based on a size of the current block and a position of a current coding tree unit (CTU).

4. The image decoding method of claim 1, wherein at least one of a horizontal position and a vertical position of the top-left position of the search region has a value less than a certain template size.

5. The image decoding method of claim 1, wherein a bottom-right position of the search region is determined based on a position of the current block and a certain search range.

6. The image decoding method of claim 5, wherein the bottom-right position of the search region is determined additionally based on a position of a current coding tree unit (CTU) and a size of the CTU.

7. The image decoding method of claim 1, wherein at least one of a horizontal position and a vertical position of the bottom-right position of the search region has a value exceeding a size difference between a current picture and the current block.

8. The image decoding method of claim 1, wherein, in response to at least one sample in the reference template area being unusable, a value of the at least one unusable sample is derived based on at least one usable sample in the reference template area.

9. The image decoding method of claim 8, wherein the at least one usable sample in the reference template area is a closest sample to the at least one unusable sample.

10. The image decoding method of claim 8, wherein, in response to right samples or bottom samples in the reference template area being unusable, values of the unusable right samples or bottom samples are derived based on usable samples in the reference template area.

11. The image decoding method of claim 8, wherein the value of the at least one unusable sample is derived based on an average value of usable samples in the reference template area.

12. An image encoding method of encoding an image performed by an image encoding apparatus, the method comprising:

    determining a search region related to a current block;
    deriving errors between reference template areas which are template areas of reference blocks in the search region, and a current template area which is a template area of the current block; and
    determining a reference block of the current block based on the errors.

13. A computer-readable recording medium for storing a bitstream generated using an image encoding method of claim 12.

14. A method of transmitting a bitstream generated using an image encoding method, wherein the image encoding method comprises:

    determining a search region related to a current block;
    deriving errors between reference template areas which are template areas of reference blocks in the search region, and a current template area which is a template area of the current block; and
    determining a reference block of the current block based on the errors.

[FIG. 1]

[FIG. 2]

EP 4 708 853 A1

[FIG. 3]

EP 4 708 853 A1

[FIG. 4]

START

S400

PERFORM PREDICTION (DETERMINE INTRA PREDICTION MODE/TYPE, DERIVE NEIGHBORING REFERENCE SAMPLES, AND GENERATE PREDICTION SAMPLES)

S410

RESIDUAL PROCESSING

S420

ENCODE IMAGE/VIDEO INFORMATION INCLUDING PREDICTION INFORMATION AND RESIDUAL INFORMATION

END

[FIG. 5]

185

INTRA PREDICTION UNIT

ORIGINAL PICTURE

RECONSTRUCTED REFERENCE
REGION IN CURRENT PICTURE

INTRA PREDICTION
MODE/TYPE DETERMINER
(186)

REFERENCE
SAMPLE DERIVER
(187)

PREDICTION
SAMPLE DERIVER
(188)

INTRA PREDICTION
MODE/TYPE INFORMATION

PREDICTION SAMPLE(S)

[FIG. 6]

```
                    ┌─────────────┐
                    │    START    │
                    └─────────────┘
                           │
                           │                          S600
                           ▼
┌──────────────────────────────────────────────────────┐
│  DETERMINE INTRA PREDICTION MODE/TYPE FOR CURRENT     │
│     BLOCK BASED ON RECEIVED PREDICTION INFORMATION     │
└──────────────────────────────────────────────────────┘
                           │
                           │                          S610
                           ▼
┌──────────────────────────────────────────────────────┐
│          DERIVE NEIGHBORING REFERENCE SAMPLES          │
└──────────────────────────────────────────────────────┘
                           │
                           │                          S620
                           ▼
┌──────────────────────────────────────────────────────┐
│    PERFORM PREDICTION (GENERATE PREDICTION SAMPLES)    │
└──────────────────────────────────────────────────────┘
                           │
                           │                          S630
                           ▼
┌──────────────────────────────────────────────────────┐
│  DERIVE RESIDUAL SAMPLES BASED ON RESIDUAL INFORMATION │
└──────────────────────────────────────────────────────┘
                           │
                           │                          S640
                           ▼
┌──────────────────────────────────────────────────────┐
│    GENERATE RECONSTRUCTED BLOCK/PICTURE BASED ON       │
│      PREDICTION SAMPLES AND RESIDUAL SAMPLES           │
└──────────────────────────────────────────────────────┘
                           │
                           ▼
                    ┌─────────────┐
                    │     END     │
                    └─────────────┘
```

[FIG. 7]

265

INTRA PREDICTION
MODE/TYPE INFORMATION →

INTRA PREDICTION
MODE/TYPE DETERMINER
(266)

RECONSTRUCTED REFERENCE
REGION IN CURRENT PICTURE →

REFERENCE
SAMPLE DERIVER
(267)

→ PREDICTION SAMPLE

PREDICTION
SAMPLE DERIVER
(268)

INTRA PREDICTION UNIT

[FIG. 8]

[FIG. 9]

[FIG. 10]

[FIG. 11]

[FIG. 12]

Picture
boundary

(template size, StartY)

Template
area

Search region

Reference
block

Current
block

[FIG. 13]

[FIG. 14]

```
                    ┌─────────────┐
                    │    START    │
                    └──────┬──────┘
                           │              S1410
         ┌─────────────────▼─────────────────┐
         │      DETERMINE SEARCH REGION       │
         └─────────────────┬─────────────────┘
                           │              S1420
         ┌─────────────────▼─────────────────┐
         │ DERIVE ERROR BETWEEN REFERENCE     │
         │ TEMPLATE AREA                      │
         │ AND CURRENT TEMPLATE AREA          │
         └─────────────────┬─────────────────┘
                           │              S1430
         ┌─────────────────▼─────────────────┐
         │      DETERMINE REFERENCE BLOCK     │
         └─────────────────┬─────────────────┘
                           │
                    ┌──────▼──────┐
                    │     END     │
                    └─────────────┘
```

[FIG. 15]

[FIG. 16]

Candidate
pixel position

Integer-pel position pixel

(a)

Candidate
pixel position

Integer-pel position pixel    half-pel position pixel

1/4-pel position pixel    3/4-pel position pixel

(b)

[FIG. 17]

(StartX, StartY)

Search region

(EndX, EndY)

(mvXMin, mvYMin)

(mvXMax, mvYMax)

(iCurrX, iCurrY)

Current block

[FIG. 18]

[FIG. 19]

: Not available sample  : available sample  : available sample

(a)

: Not available sample  : available sample  : available sample

(b)

: Not available sample  : available sample  : available sample

(c)

[FIG. 20]

(a)

: Not available sample

: available sample

: available sample

(b)

: Not available sample

: available sample

: available sample

[FIG. 21]

: Not available sample   : available sample

(a)

(b)

(c)

[FIG. 22]

(a)

(b)

(c)

[FIG. 23]

: Not available sample    : available sample

(a)

(b)

[FIG. 24]

: Not available sample

: available sample

: available sample

(a)

: Not available sample

: available sample

: available sample

(b)

: Not available sample

: available sample

: available sample

(c)

[FIG. 25]

(a)

: Not available sample

: available sample

: available sample

(b)

: Not available sample

: available sample

: available sample

(c)

: Not available sample

: available sample

: available sample

[FIG. 26]

```
                    ╭─────────────╮
                    │    START    │
                    ╰──────┬──────╯
                           │
                           │              S2610
                           ▼
              ◇─────────────────────────◇
             ╱  DOES UNAVAILABLE SAMPLE   ╲      NO
            ◇   EXIST IN REFERENCE          ◇────────┐
             ╲  TEMPLATE AREA?             ╱         │
              ◇─────────────────────────◇           │
                           │                        │
                          YES             S2620      │
                           ▼                        │
          ┌────────────────────────────────────┐    │
          │ DERIVE UNAVAILABLE SAMPLE VALUE     │    │
          │ BASED ON AVAILABLE SAMPLE IN        │    │
          │ REFERENCE TEMPLATE AREA             │    │
          └────────────────┬───────────────────┘    │
                           │◄───────────────────────┘
                           ▼
                    ╭─────────────╮
                    │     END     │
                    ╰─────────────╯
```

[FIG. 27]

[FIG. 28]

## INTERNATIONAL SEARCH REPORT

| International application No. |
| --- |
| **PCT/KR2024/005391** |

### A. CLASSIFICATION OF SUBJECT MATTER

**H04N 19/132**(2014.01)i; **H04N 19/105**(2014.01)i; **H04N 19/176**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/132(2014.01); H04N 19/105(2014.01); H04N 19/11(2014.01); H04N 19/122(2014.01); H04N 19/146(2014.01); H04N 19/51(2014.01); H04N 19/513(2014.01); H04N 19/56(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 블록(block), 탐색(search), 영역(area), 템플릿(template), 오차(error), 비용(cost), 차이(difference), 참조(reference), 매칭(matching), 인트라(intra)

### C. DOCUMENTS CONSIDERED TO BE RELEVANT

| Category* | Citation of document, with indication, where appropriate, of the relevant passages | Relevant to claim No. |
| --- | --- | --- |
| X | WO 2023-020588 A1 (MEDIATEK SINGAPORE PTE. LTD. et al.) 23 February 2023 (2023-02-23)<br>See claim 1. | 1,12-14 |
| A | | 2-11 |
| A | WO 2019-228660 A1 (FRAUNHOFER-GESELLSCHAFT ZUR FÖRDERUNG DER ANGEWANDTEN FORSCHUNG E.V.) 05 December 2019 (2019-12-05)<br>See claim 1. | 1-14 |
| A | CN 111629207 A (SUN YAT-SEN UNIVERSITY) 04 September 2020 (2020-09-04)<br>See claims 1-5. | 1-14 |
| A | US 2019-0364283 A1 (FRAUNHOFER-GESELLSCHAFT ZUR FOERDERUNG DER ANGEWANDTEN FORSCHUNG E.V) 28 November 2019 (2019-11-28)<br>See claims 1-76. | 1-14 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 August 2024** | **08 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| :--- |
| **PCT/KR2024/005391** |

**C. DOCUMENTS CONSIDERED TO BE RELEVANT**

| Category* | Citation of document, with indication, where appropriate, of the relevant passages | Relevant to claim No. |
| :---: | :--- | :---: |
| A | US 2015-0181219 A1 (HUAWEI TECHNOLOGIES CO., LTD.) 25 June 2015 (2015-06-25)<br>See claims 1-5. | 1-14 |

Form PCT/ISA/210 (second sheet) (July 2022)

49

**INTERNATIONAL SEARCH REPORT**
Information on patent family members

International application No.

**PCT/KR2024/005391**

| Patent document cited in search report | | | Publication date (day/month/year) | Patent family member(s) | | | Publication date (day/month/year) |
|---|---|---|---|---|---|---|---|
| WO | 2023-020588 | A1 | 23 February 2023 | EP | 4388744 | A1 | 26 June 2024 |
| | | | | WO | 2023-020589 | A1 | 23 February 2023 |
| WO | 2019-228660 | A1 | 05 December 2019 | EP | 3804329 | A1 | 14 April 2021 |
| | | | | US | 11546630 | B2 | 03 January 2023 |
| | | | | US | 2021-0084329 | A1 | 18 March 2021 |
| CN | 111629207 | A | 04 September 2020 | CN | 111629207 | B | 16 September 2022 |
| US | 2019-0364283 | A1 | 28 November 2019 | EP | 3580928 | A1 | 18 December 2019 |
| | | | | WO | 2018-146151 | A1 | 16 August 2018 |
| US | 2015-0181219 | A1 | 25 June 2015 | EP | 2334080 | A1 | 15 June 2011 |
| | | | | US | 2011-0188579 | A1 | 04 August 2011 |
| | | | | US | 2016-0295233 | A1 | 06 October 2016 |
| | | | | US | 9014270 | B2 | 21 April 2015 |
| | | | | US | 9392297 | B2 | 12 July 2016 |
| | | | | US | 9743107 | B2 | 22 August 2017 |
| | | | | WO | 2010-034242 | A1 | 01 April 2010 |

Form PCT/ISA/210 (patent family annex) (July 2022)